(19) Europäisches Patentamt
European Patent Office
Office européen des brevets

(11) **EP 2 982 521 B1**

(12) **EUROPEAN PATENT SPECIFICATION**

(45) Date of publication and mention
of the grant of the patent:
**19.07.2017 Bulletin 2017/29**

(51) Int Cl.:
**B60C 11/24** *(2006.01)* **B60C 23/04** *(2006.01)*
**B60W 40/12** *(2012.01)* **B60T 8/00** *(2006.01)*

(21) Application number: **14179726.6**

(22) Date of filing: **04.08.2014**

(54) **System and method for determining tire wear properties**

System und Verfahren zur Bestimmung von Reifenabriebeigenschaften

Système et procédé permettant de déterminer les propriétés d'usure d'un pneumatique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.02.2016 Bulletin 2016/06**

(73) Proprietors:
• **Dr. Ing. h.c. F. Porsche AG**
  **70435 Stuttgart (DE)**
• **Nira Dynamics AB**
  **583 30 Linköping (SE)**

(72) Inventors:
• **Unterreiner, Michael, Dr**
  **70191 Stuttgart (DE)**

• **Svantesson, Thomas, Dr.**
  **589 51 Linköping (SE)**
• **Svensson, Anders**
  **590 73 Ljungsbro (SE)**
• **Lindskog, Peter**
  **583 31 Linköping (SE)**

(74) Representative: **Sturm, Christoph**
  **Quermann - Sturm - Weilnau**
  **Patentanwälte Partnerschaft mbB**
  **Unter den Eichen 5**
  **65195 Wiesbaden (DE)**

(56) References cited:
  **US-A1- 2005 066 719    US-A1- 2010 060 443**
  **US-A1- 2010 186 492**

**Description**

The present invention relates to a system and to a method for determining tire wear for tires of a wheeled motor vehicle.

US 2010/0060443 A1, according to the preamble of claim 1, discloses a prior art system for determining tire wear for tires of a wheeled motor vehicle. The system uses signals provided by a wheel velocity sensor, by a pressure sensor and by a GPS receiver to calculate tire wear.

US 2010/0186492 A1 discloses another prior art system for determining tire wear for tires of a wheeled motor vehicle. The system uses signals provided by a wheel speed sensor and by an acceleration sensor to calculate tire wear.

Against this background, the present invention provides a new system and new method for determining tire wear for tires of a wheeled motor vehicle allowing a simple, reliable and robust determination of the tire wear.

The system for determining tire wear for tires of a wheeled motor vehicle according to present invention is defined in claim 1.

The system according to present invention comprises a direct tire pressure determination unit being configured to measure at least the tire pressure of the tires of the motor vehicle. The system according to present invention further comprises an indirect tire pressure determination unit being configured to determine for at least some of the tires of the motor vehicle a roll radius factor corresponding to or depending from the roll radius of the respective tire. The system according to present invention further comprises a tire force determination unit being configured to determine a vertical force factor corresponding to or depending from a vertical force applied to the tires of the motor vehicle.

The system according to present invention further comprises a processing unit determining the tire wear for such tires of the motor vehicle for which the indirect tire pressure determination unit provides the respective roll radius factor. The processing unit compensates the roll radius factor of the tires provided by the indirect tire pressure determination unit on basis of the tire pressures of the respective tires provided by direct tire pressure determination unit and of basis of the vertical force factor of the respective tires provided by the tire force determination unit thereby providing a compensated roll radius factor for the respective tire. The processing unit compares the compensated roll radius factor for the respective tire with a reference roll radius factor in such a way that the difference between the compensated roll radius factor and the reference roll radius factor of the respective tire provides the tire wear of the respective tire.

The present invention provides a new system for determining tire wear for tires of a motor vehicle allowing a simple, reliable and robust determination of the tire wear.

According to an improved embodiment, the direct tire pressure determination unit is further configured to measure the tire temperatures of the tires, wherein the processing unit compensates the roll radius factor of the tires provided by the indirect tire pressure determination unit also on basis of the tire temperatures of the respective tires provided by the direct tire pressure determination unit. This allows a more reliable and more robust determination of the tire wear.

According to a first alternative of the present invention, the indirect tire pressure determination unit is configured to determine a relative roll radius factor for a subset of tires of the motor vehicle on basis of a relative roll radius analysis, wherein the processing unit determines a relative tire wear only for said subset of tires. The processing unit determines on basis of input data received by an input device the reference roll radius factor. The tire wear determination using the relative roll radius analysis requires input data to be provided by the input device. Further, if all the tires wear down with approximately the same rate, this tire wear will be undetected by nature of the first alternative using the relative roll radius analysis.

These drawbacks can be avoided by a second alternative of the present invention in which the indirect tire pressure determination unit is configured to determine an absolute roll radius factor for all tires of the motor vehicle on basis of an absolute roll radius analysis, wherein the processing unit determining an absolute tire wear for all tires of the motor vehicle. The processing unit determines during a regular driving mode of the motor vehicle the reference roll radius factor on basis of data measured and/or calculated during the regular driving mode.

The method for determining tire wear for tires of a wheeled motor vehicle according to present invention is defined in claim 1.

A computer program product for determining tire wear for tires of a wheeled motor vehicle, carrying out the steps of the above method, is defined in claim 15.

Embodiments of the system for determining tire wear for tires of a motor vehicle are given in the dependent claims and the description below. Exemplary embodiments will be explained in more detail with reference to the drawing, in which:

Figure 1    shows a schematic block diagram of a system for determining tire wear for tires of a motor vehicle;
Figure 2    shows another block diagram for the system of Figure 1;
Figure 3    shows another block diagram for the system of Figures 1 and 2;
Figure 4    shows on tire of the motor vehicle;
Figure 5    shows a diagram illustrating a first alternative of the invention using a relative roll wheel radius analysis;

Figure 6     shows another diagram illustrating the first alternative of the invention using the relative roll wheel radius analysis;

Figure 7     shows a diagram illustrating a second alternative of the invention using an absolute roll wheel radius analysis.

The present patent application relates to a system for determining tire wear for tires of a wheeled motor vehicle.

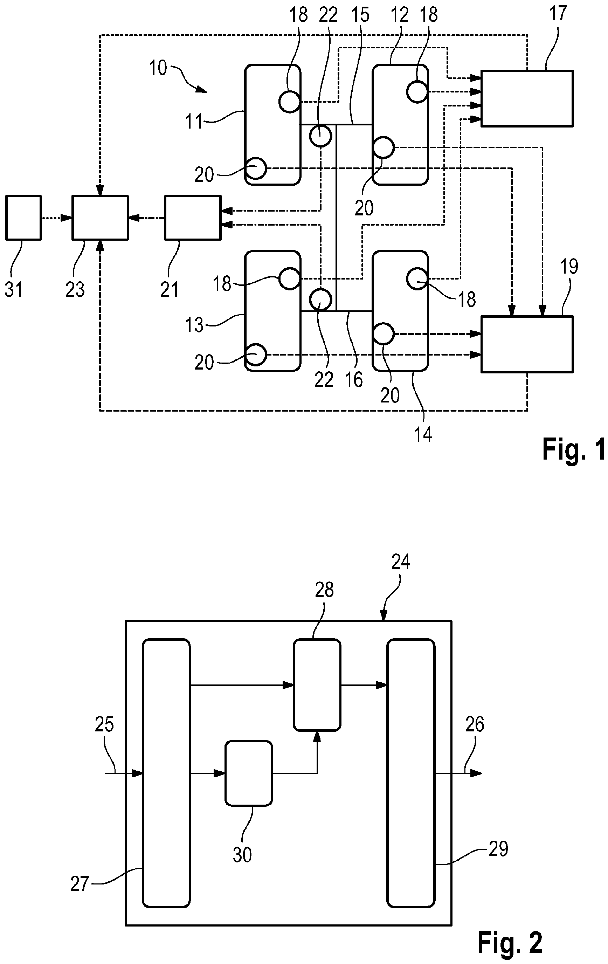

Figure 1 shows a schematic, exemplary block diagram of a wheeled motor vehicle 10 having front tires 11, 12 and rear tires 13, 14. Is should be noted that the invention is not limited to such a motor vehicle. The invention can also be used in connection with other motor vehicles like a motor cycle having only one front tire and one rear tire.

The front tires 11 and 12, namely a left front tire 11 and right front tire 12, are assigned to a front axle 15 of the motor vehicle. The rear tires 13 and 14, namely a left rear tire 13 and right rear tire 14, are assigned to a rear axle 16 of the motor vehicle 10.

The system for determining the tire wear of the tires 11, 12, 13, 14 of a motor vehicle 10 comprises a direct tire pressure determination unit 17 being configured to measure at least the tire pressure of the tires 11, 12, 13 and 14 of the motor vehicle 10. In the shown embodiment, the direct tire pressure determination unit 17 comprises sensors 18 assigned to the tires 11, 12, 13 and 14 of the motor vehicle 10, wherein the sensors 18 of the direct tire pressure determination unit 17 are configured to measure at least the tire pressure of the tires 11, 12, 13 and 14 of the motor vehicle 10.

Preferably, the direct tire pressure determination unit 17, namely sensors of the same, is further configured to measure the tire temperatures of the tires of the motor vehicle 10.

The system for determining the tire wear of the tires 11, 12, 13, 14 of a motor vehicle 10 further comprises an indirect tire pressure determination unit 19 being configured to determine for at least some of the tires 11, 12, 13, 14 of the motor vehicle 10 a roll radius factor corresponding to or depending from the roll radius of the respective tire 11, 12, 13, 14.

In the shown embodiment, the indirect tire pressure determination unit 19 comprises sensors 20 assigned to the tires 11, 12, 13 and 14 of the motor vehicle 10, wherein the sensors 20 of the indirect tire pressure determination unit 19 are configured to measure variables of the motor vehicle, e.g. the wheel speed of the tires 11, 12, 13 and 14, on which the roll radius factors are to be determined. Details of the determination of the roll radius factors will be described below in greater detail.

The system for determining the tire wear of the tires 11, 12, 13, 14 of a motor vehicle 10 further comprises a tire force determination unit 21 being configured to determine a vertical force factor corresponding to or depending from a vertical force applied to the tires 11, 12, 13, 14 of the motor vehicle 10. The tire force determination unit 21 comprises sensors 22 being configured to measure the height of the tires 11, 12, 13, 14 or the height of the axles 15, 16 to which are tires 11, 12, 13, 14 are assigned thereby providing the vertical force factor corresponding to or depending from a vertical force applied to the tires 11, 12, 13, 14 of the motor vehicle 10.

According to a first embodiment, said sensors 22 are designed as axle height sensors. For motor vehicles 10 equipped with Xenon light control systems, i.e. headlights that have an adjustable beam alignment, the pitch angle of the motor vehicle 10 has to be determined. An estimate of the angle is achieved by means of a sensor measuring the distance between the rear axle 16 and the chassis. For many motor vehicles this is extended with an additional sensor, measuring the distance between the front axle 15 and the chassis as well. According to a second embodiment, said sensors 22 are designed as individual tire height sensors.

Such sensors measuring the height between a tire 11, 12, 13, 14 and the chassis are available in vehicles with e.g. air suspension systems. In contradiction to the axle height sensors, these sensors are individual for each tire 11, 12, 13 and 14, which make them more capable to detect sidewise load changes in the car.

The system for determining the tire wear of the tires 11, 12, 13, 14 of a motor vehicle 10 further comprises a processing unit 23 determining the tire wear for such tires of the motor vehicle for which the indirect tire pressure determination unit 19 provides the respective roll radius factor. The processing unit 23 compensates the roll radius factor of the tires 11, 12, 13, 14 provided by the indirect tire pressure determination unit 19 at least on basis of the tire pressures of the respective tires 11, 12, 13, 14 provided by direct tire pressure determination unit 17 and on basis of the vertical force factor of the respective tires 11, 12, 13, 14 provided by the tire force determination unit 21 thereby providing a compensated roll radius factor for the respective tire. In case that the direct tire pressure determination unit 17 is further configured to measure the tire temperatures of the tires of the motor vehicle 10, the processing unit 23 compensates the roll radius factor of the tires 11, 12, 13, 14 further on basis of the tire temperatures. The above compensation of the roll radius factor of the tires 11, 12, 13, 14 provided by the indirect tire pressure determination unit 19 results in compensated roll radius factors for the respective tires 11, 12, 13, 14. The processing unit 23 then compares the compensated roll radius factor for the respective tire 11, 12, 13, 14 with a reference roll radius factor in such a way that the difference between the compensated roll radius factor and the reference roll radius factor of the respective tire provides the tire wear of the respective tire 11, 12, 13, 14.

The invention is based on the understanding that the effective roll radius of each tire is mainly a function of the tire pressure in the respective tire 11, 12, 13, 14, of the applied vertical force on the respective tire 11, 12, 13, 14, and of the actual tire wear of the respective tire 11, 12, 13, 14. In order to determine the tire wear, the system according to the present invention compensates at least for the tire pressure in the respective tire 11, 12, 13, 14 and for the vertical force on the respective tire 11, 12, 13, 14.

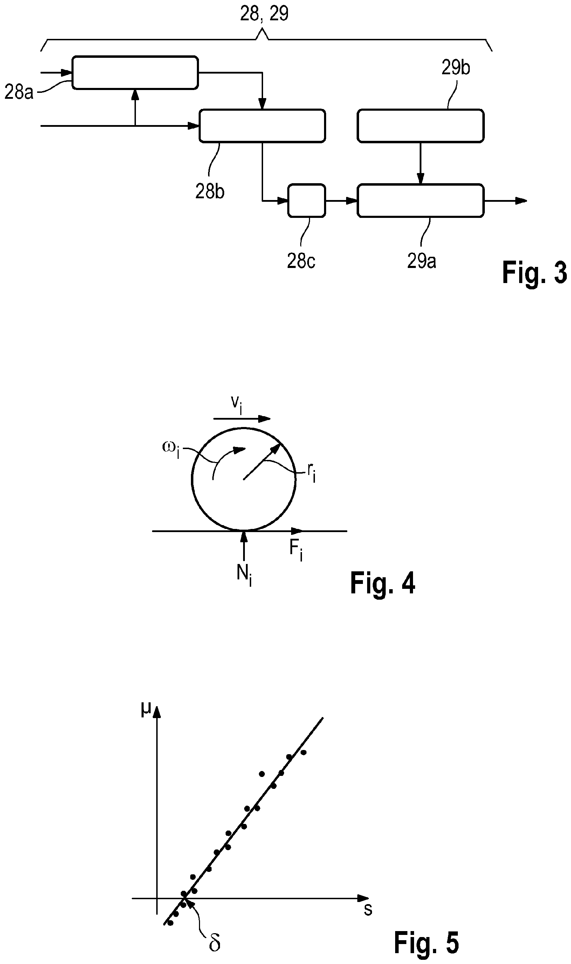

Figures 2 and 3 illustrate further details of the system for determining the tire wear of the tires 11, 12, 13, 14 of a motor vehicle 10 in form of other block diagrams.

The block 24 in Figure 2 illustrates the tire wear determining system receiving input data 25 at least from the sensors 18, 20, 22 of the direct tire pressure determination unit 17, of the indirect tire pressure determination unit 19 and of the tire force determination unit 21. The system 24 generates output data 26, namely at least output data being indicative of the tire wear to be determined.

The block 27 in Figure 2 illustrates a signal pre-processing (SPP) unit, wherein the signal pre-processing (SPP) unit 27 performs signal conditioning and calculation of common variables. The block 28 in Figure 2 illustrates the calculation of the roll radius factors by the indirect tire pressure determination unit 19 and the compensation of said roll radius factors by the processing unit 23. The block 29 in Figure 2 illustrates the determination of the tire wear of the tires 11, 12, 13, 14 on basis of the compensated roll radius factors.

Figure 2 further illustrates a driving state detector unit 30. The driving state detector unit 30 is configured to detect the driving state of the motor vehicle 10. The processing unit 23 determines the tire wear of tires 11, 12, 13, 14 only at predefined driving state of the motor vehicle 10, preferably if the lateral acceleration of the motor vehicle 10 is relatively low and if brakes of the motor vehicle 10 are inactive and if a transmission system of the motor vehicle 10 is inactive, and if an ESP-unit of the motor vehicle 10 is inactive.

Figure 3 illustrates the blocks 28, 29 of Figure 2 in greater details. In Figure 3, block 28 of Figure 2 is represented by three sub-blocks 28a, 28b and 28c, wherein block 29 of Figure 2 is represented by two sub-blocks 29a and 29b. The sub-block 28a illustrates signal quality checks. The sub-block 28b illustrates the calculation of the roll radius factors by the indirect tire pressure determination unit 19. Sub-block 28c illustrates the compensation of said roll radius factors by the processing unit 23. The sub-block 29a illustrates the the determination of the tire wear of the tires 11, 12, 13, 14 on basis of the compensated roll radius factors provided by sub-block 28c and on basis of reference roll radius factors provided by block 29b. It is also possible to compensate the roll radius factors for changes in the speed of the motor vehicle 10 resulting in changing circumferential forces on the tires 11, 12, 13, 14.

According to a first alternative, the indirect tire pressure determination unit 19 is configured to determine a relative roll radius factor for a subset of tires 11, 12, 13, 14 of the motor vehicle 10 on basis of a relative roll radius analysis, wherein the processing unit 23 determines a relative tire wear only for said subset of tires 11, 12, 13, 14. Details will be described below.

The relative and absolute roll radius analysis is based on the principle that for a fixed tire pressure and a fixed vertical load, the roll radius of the tire 11, 12, 13, 14 becomes smaller in proportion to the tire wear and therefore the wheel speed increases. The tire wear estimation considers the geometry shown in Figure 4. At the driven wheel or tire i (i = 11, 12, 13, 14) of the motor vehicle 10 the circumferential velocities $\omega_i r_i$ in the contact patches typically differ from the absolute velocity $v_i$ between wheel hub and pavement. This difference is called longitudinal wheel slip $s_i$ and is defined as:

$$s_i = \frac{\omega_i r_i}{v_i} - 1$$

The normalized traction force $\mu_i$ is furthermore defined as the ratio between the wheel reaction force $F_i$ and the normal force $N_i$

$$\mu_i = \frac{F_i}{N_i}$$

where $\mu_{i,max} = max|F_i/N_i|$ corresponds to the maximum friction value in the longitudinal direction for each individual wheel.

The force $F_i$ can be calculated through the available torque $T_i$ at the given wheel after the gearbox or transmission system of the motor vehicle 10

$$F_i = \frac{T_i}{r_i}$$

Let *T* denote the total available torque after the gearbox. Then by assuming that the torque distribution between the front (F) axle 15 and rear (R) axle 16 is

$$T_F = \gamma T$$

$$T_R = (1 - \gamma)T$$

with $\gamma \in [0,1]$ being a known torque transfer parameter, the normalized traction forces for each wheel or tire on the axle can be computed as

$$\mu_F = \frac{T_F}{2r_F N_F}$$

$$\mu_R = \frac{T_R}{2r_R N_R}$$

where $r_F$, $r_R$, $N_F$ and $N_R$ are the wheel radii and the normal forces at the front (F) and rear (R) axles 15, 16, respectively.

The idea behind the relative tire wear determination is to use the measured and normalized traction forces and the longitudinal wheel slips to identify the current relative tire wear of the tires 11, 12, 13, 14. This method works in traction mode for: front-wheel drive vehicles, with the rear wheels serving as velocity references; rear-wheel drive vehicles, with the front wheels serving as velocity references; vehicles with a hang-on all wheel drive in which the drive torque is distributed fully variably to the front axle or to the rear axle, depending on the driving situation.

E.g., for a front-wheel drive vehicle 10 the front tires 11, 12 are affected by slip, which is calculated directly from the wheel speeds $\omega_i$ (i = 11, 12, 13, 14) as

$$s_{11} = \frac{\omega_{11}}{\omega_{13}} - 1, \qquad s_{12} = \frac{\omega_{12}}{\omega_{14}} - 1$$

The normalized traction forces $\mu_i$ of the front wheels 11, 12 are calculated based on the engine torque. The engine torque of the motor vehicle 10 is available on a bus system of the motor vehicle 10.

The above calculations are preferably performed in block 27 of Figure 2.

Signal processing techniques are then used to calculate offsets $\delta_i$ and slopes $1/k_i$ of a linear regression fit (see Figure 5) $\mu_i$ versus slip data $s_i$

$$s_{11} = \frac{1}{k_{11}}\mu_{11} + \delta_L \quad and \quad s_{12} = \frac{1}{k_{12}}\mu_{12} + \delta_R$$

A linear regression of the slip $s_i$ versus the normalized traction forces $\mu_i$ provides the relative roll radius factor. In particular, the offset $\delta_L$, $\delta_R$ serves as relative roll radius factor.

The above linear regression is preferably performed in block 28, 28a of Figure 2, 3.

A relative roll radius analysis can be implemented to detect a relative tire wear of one tire to three tires and here it is assumed that the tire wear will be pronounced on the driven axle during normal customer relevant driving, and on the front axle during race-track applications.

Furthermore, for rear wheel drive vehicles, the same equations apply with the front wheels serving as velocity references. E.g., for an all-wheel drive vehicle in which the drive torque is distributed fully variably to the front axle 15 or the rear axle 16, the above equations apply. In a non-limited example, for a motor vehicle 10 with most of the driving torque applied on the rear axle 16 the slips are calculated as

$$s_{left} = \frac{\omega_{13}}{\omega_{11}} - 1, \qquad s_{right} = \frac{\omega_{14}}{\omega_{12}} - 1$$

and the linear regression now to be solved can for example be

$$s_{left} = [\mu_{13} - \mu_{11} \quad 1] \cdot \begin{bmatrix} 1/k_{13} \\ \delta_L \end{bmatrix} \qquad s_{right} = [\mu_{14} - \mu_{12} \quad 1] \cdot \begin{bmatrix} 1/k_{14} \\ \delta_R \end{bmatrix}$$

It is here stressed that the indirect tire pressure determination unit 19 cannot provide an absolute roll radius factor. They are relative by nature.

As explained above, the relative roll radius factor is a function of the vertical load and a function of the tire pressure and therefore becomes compensated on basis of these variables using the data provided by the direct tire pressure determination unit 17 and by the tire force determination unit 21. This compensation is performed in block 28, 28b of Figure 2, 3. The compensation provides the compensated roll radius factor for the respective tires 11, 12, 13, 14.

As also explained above, the processing unit 23 compares the compensated roll radius factor for the respective tire 11, 12, 13, 14 with a reference roll radius factor in such a way that the difference between the compensated roll radius factor and the reference roll radius factor of the respective tire provides the tire wear of the respective tire 11, 12, 13, 14.

When the relative roll radius analysis is used, the processing unit 23 determines the reference roll radius factor on basis of input data received by an input device 31 (see Figure 1). The input device 31 is configured to receive input data provided by a user interacting with the input device 31 through a user interface, wherein the processing unit 23 determines the relative tire wear on basis of the input data received by the input device 31. Preferably, the driver inputs said data once new tires 11, 12, 13, 14 are mounted. After a tire change, the driver uses the user interface to type in the actual tread depth measured at the time when mounting the tires. This information then gives the reference for the tire wear.

The relative roll radius analysis further uses learning data. This data gets learnt during normal driving after an active reset by the driver. The learning data consists of roll radius factor ratios between the tire positions and these values are stored for various driving speed intervals. The calibration data for relative roll radius analysis is collected in a number of speed slots. The calculations are batch based in the linear regression, and each speed slot can include multiple batches.

A situation of tire wear may be detected if the roll radius factor of a specific tire has changed due to tire wear. The roll radius factor becomes compensated for the external influences, namely at least vertical load change and pressure change. As mentioned above, the relative roll radius analysis works for a radius change on one to three tires. This is however not considered to be a severe limitation since the tire wear is expected to be most severe on tires mounted on the rear axle 16 or front axle 15. The obvious benefit of the invention is that for monitoring the state of the tire wear no additional sensor is necessary.

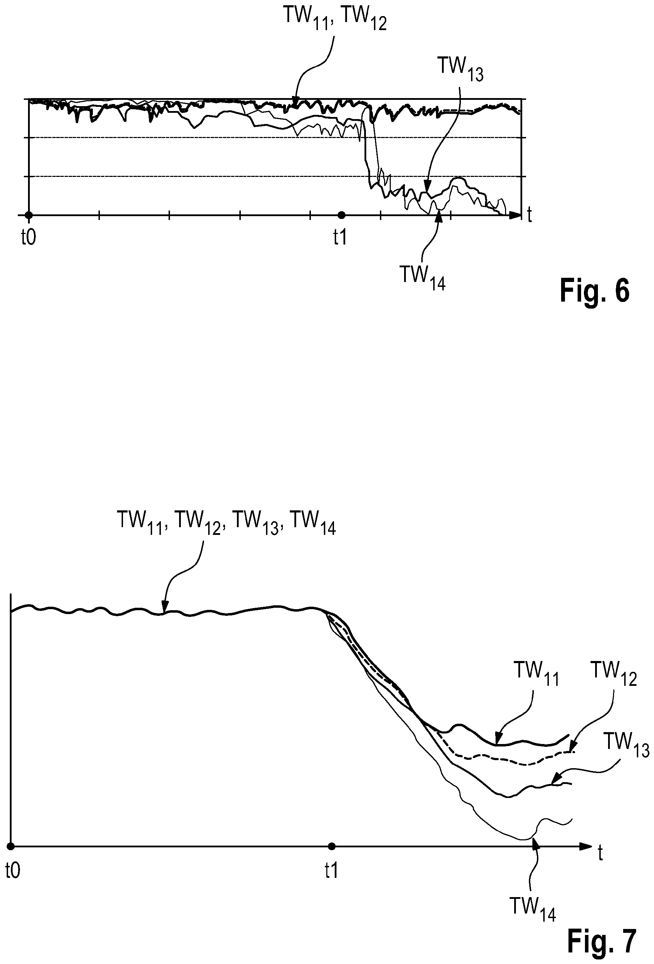

An example result using the relative roll radius analysis is given in Figure 6. The motor vehicle 10 is here driven with new tires 11, 12, 13, 14 on all wheels starting at time t0. At time t1 worn down tires become mounted on the rear axle 16. As can be seen, the system clearly indicates tire wear $TW_{13}$, $TW_{14}$ for tires 13, 14 on the rear axle 16.

When the determined tire wear is greater than a predefines threshold, the system can generate a warning signal for the driver. When the determined tire wear is smaller than the pre-defined threshold, the system will not generate such a warning signal.

A major drawback with the relative roll radius analysis is that it requires the tread depth to be measured in order to input that by the input unit 31 as a starting point reference.

Another drawback of the relative roll radius analysis is that if all the tires 11, 12, 13, 14 wear down with approximately the same rate, this tire wear will be undetected since the estimates are relative by nature.

A remedy to this situation is to use an absolute roll radius analysis using various input signals, such as a radar speed providing an estimate of the vehicles absolute velocity from an adaptive cruise control, GPS Doppler speed, GPS speed using differentiated pseudo-ranges or similar to estimate the absolute speed at each individual tire 11, 12, 13 and 14 with good precision. To this end, this estimate of the absolute speed of the vehicle is then used to calculate the individual wheel slips. For the normalized traction forces, the equations describes in connection with the relative roll radius analysis still apply, but the linear regression is now extended to be

$$s_i = [\mu_i \quad -\omega_i/v_i] \cdot \begin{bmatrix} 1/k_i \\ \Delta r_i \end{bmatrix}$$

where $\Delta r_i$ are the estimated errors in the assumed individual wheel radii $r_i$ and $\omega_i$ are the measured angular velocities. With this new linear regression, the same approach as presented above applies, but the intersection is now $\Delta r_i$. $\Delta r_i$ serves as absolute roll radius factor.

Hence, the used wheel radii $r_i$ may be interpolated/extrapolated and calculated as a function of the vehicle speed, individual tire pressures and vertical loads as stated below.

The absolute tire wear estimator needs reference data. This data gets learnt during normal driving, possibly but not necessarily after an active reset by the driver. If an active reset is conducted, this is preferably done after a tire switch.

The learning data consists of the estimated errors in the assumed individual wheel radii $\Delta r_i$ and these values are stored for various driving speed intervals. The calibration data for the wheel individual radii are collected in a number of speed slots. The calculations are batch based in the linear regression, and each speed slot can include multiple batches.

During calibration, for each of the separate speed ranges a separate calibration is calculated. Only in the case when a calibration value for a speed range has been calculated, monitoring of the tire wear is provided in that speed range. To this end, it is necessary that the vehicle actually has been in that speed range, for which tire wear estimation is to be accomplished, such that calibration for that speed range is possible.

Calibration takes several minutes. As a result, for a motor vehicle 10, e.g. previously driven at speeds allowed in urban or rural environments and now being driven at higher speeds, e.g. on a highway, the tire wear information will not be available as long as no calibration for the respective higher speed range has been completed. That is, at least for several minutes the tire wear monitoring in a previously calibrated speed range is not possible or at least not reliable. To cover such periods, in tire pressure monitoring applications it is known to estimate calibration values for such speed ranges.

EP 1 403 100 A1 discloses to extrapolate calibration values for speed ranges for which no calibration has been completed on the basis of calibration values of adjacent speed ranges for which calibration has been completed. DE 103 60 723 A1 discloses to estimate calibration values for speed ranges for which no calibration has been completed on the basis of calibration values of adjacent speed ranges for which calibration been completed, particular by averaging calibration values of adjacent lower speed range and an adjacent higher speed range.

Since the roll radius of a tire 11, 12, 13, 14 can be measured in a test-bench for various speed ranges, pressures and vertical loads, such calibration values can be used as pre-defined calibration curves for a completely new tire. Thus based on at least one tire calibration data such a calibration curve can be selected which then can be used as starting point for the complete speed range of the motor vehicle 10. This selected calibration curve can with the measured tire pressure from the direct tire pressure determination unit 17 and vertical load from the tire force determination unit then be used to calculate compensated wheel radii $r_i$ for various speed ranges serving as compensated absolute roll radius factor.

An example result using the absolute roll radius analysis is given in Figure 7. The vehicle is here driven with new tires on all wheels from time t0 to time t1. At time t1 worn tires on all wheels became mounted. The absolute tire wear estimator clearly indicates the tire wear TW on all tires 11, 12, 13, 14. This tire wear would be left undetected by the relative tire wear estimator, since the relative speeds would be unchanged. Furthermore, the absolute tire wear estimator will work for all types of front-wheel/real-wheel/all-wheel drive vehicles, including permanent all-wheel drive vehicles with 50:50 torque split between the front axle 15 and rear axle 16.

As mentioned above, the processing unit 23 determines the tire wear of tires 11, 12, 13, 14 only at defined driving states of the motor vehicle 10 detected by the driving state detector unit 30. In some driving states of the motor vehicle 10 the sensor signals may be affected by other factors than just the tire wear, which can lead to an undesired behavior such as false indications.

As a consequence, a quality examination of the input data is performed on a sample-by sample basis, and if the quality is judged to be inadequate, the tire wear determination by the processing unit 23 is temporarily deactivated. Such conditions are for example: braking in progress; gear shift in progress; control system like ABS, ESP engaged. The quality examination is performed by driving state detector unit 30.

The driving state detector unit 30 can also be used to monitor data and will disable the roll radius analysis if deemed necessary. An output signal of the driving state detector unit 30 may not be triggered unless some specific condition has been true for a period of time, e.g. oval track driving state or a roundabout driving state.

Wheel speed signals may be obtained using one or more wheel speed sensors of, for example, ABS systems and/or from the vehicles internal CAN/Flex Ray-bus and/or any suitable vehicle sensor, preferably already part of vehicles.

Sensors for generating sensor signals that can be used with the present invention is a selection of at least one of, for example, a wheel speed sensor, a wheel acceleration sensor, a 3D driving vehicle position sensor, a 3D driving vehicle velocity sensor, a driving vehicle velocity sensor, a wheel acceleration sensor, a wheel/tire pressure sensor, a driving vehicle yaw rate sensor, an engine torque sensor, a wheel axis torque sensor, a suspension (related) sensor, a wheel temperature sensor and an ambient temperature sensor. Suitable sensor types include, e.g., axel height sensors, any other analog distance sensors, geophones which convert displacements into voltage, or e.g. in-tire pressure/accelerometer sensors.

**List of Reference Signs**

| | |
|---|---|
| 10 | motor vehicle |
| 11 | tire |
| 12 | tire |
| 13 | tire |
| 14 | tire |
| 15 | axle |
| 16 | axle |
| 17 | direct tire pressure determination unit |
| 18 | sensor |
| 19 | indirect tire pressure determination unit |
| 20 | sensor |
| 21 | tire force determination unit |
| 22 | sensor |
| 23 | processing unit |
| 24 | system |
| 25 | input date |
| 26 | output data |
| 27 | block |
| 28 | block |
| 28a | sub-block |
| 28b | sub-block |
| 28c | sub-block |
| 29 | block |
| 29a | sub-block |
| 29b | sub-block |
| 30 | block |
| 31 | input unit |

**Claims**

**1.** System for determining tire wear for tires (11, 12, 13, 14) of a wheeled motor vehicle (10), comprising:

a direct tire pressure determination unit (17) being configured to measure at least the tire pressure of the tires (11, 12, 13, 14) ; **characterized in that** said System for determining tire wear for tires (11, 12, 13, 14) comprises further:

an indirect tire pressure determination unit (19) being configured to determine for at least some of the tires (11, 12, 13, 14) a roll radius factor corresponding to or depending from the roll radius of the respective tire; a tire force determination unit (21) being configured to determine a vertical force factor corresponding to or depending from a vertical force applied to the tires (11, 12, 13, 14); a processing unit (23) determining the tire wear for such tires (11, 12, 13, 14) of the motor vehicle for which the indirect tire pressure determination unit (19) provides the respective roll radius factor, namely

by compensating the roll radius factor of the tires (11, 12, 13, 14) provided by the indirect tire pressure determination unit (19) on basis of the tire pressures of the respective tires provided by direct tire pressure determination unit (17) and of basis of the vertical force factor of the respective tires provided by the tire force determination unit (21) thereby providing a compensated roll radius factor for the respective tire (11, 12, 13, 14), and by comparing the compensated roll radius factor for the respective tire with a reference roll radius factor in such a way that the difference between the compensated roll radius factor and the reference roll radius factor of the respective tire provides the tire wear of the respective tire (11, 12, 13, 14).

**2.** System according to claim 1, wherein the direct tire pressure determination unit (17) is further configured to measure the tire temperatures of the tires of the motor vehicle, and wherein the processing unit (23) compensates the roll radius factor of the tires provided by the indirect tire pressure determination unit (19) also on basis of the tire temperatures of the respective tires provided by the direct tire pressure determination unit (17).

3. System according to claim 1 or 2, wherein the direct tire pressure determination unit (17) comprises sensors (18) assigned to the tires (11, 12, 13, 14) of the motor vehicle, wherein the sensors of the direct tire pressure determination unit (17) are configured to measure at least the tire pressure of the tires of the motor vehicle and preferably the tire temperature of the tires of the motor vehicle.

4. System according to one of claims 1 to 3, wherein the tire force determination unit (21) comprises sensors (22) being configured to measure the height of the tires (11, 12, 13, 14) or the height of axles (15, 16) to which are tires are assigned thereby providing the vertical force factor corresponding to or depending from a vertical force applied to the tires of the motor vehicle.

5. System according to one of claims 1 to 4, wherein the indirect tire pressure determination unit (19) is configured to determine a relative roll radius factor for a subset of tires (11, 12, 13, 14) of the motor vehicle (10) on basis of a relative roll radius analysis, wherein the processing unit (23) determines a relative tire wear only for said subset of tires (11, 12, 13, 14) of the motor vehicle.

6. System according to claim 5, further comprising an input device (31) being configured to receive input data provided by a user interacting with the input device (31) through a user interface, wherein the processing unit (23) determines the relative tire wear on basis of the input data received by the input device (31).

7. System according to claim 5 or 6, the processing unit (23) determines on basis of input data received by the input device (31) the reference roll radius factor.

8. System according to one of claims 1 to 4, wherein the indirect tire pressure determination unit (19) is configured to determine an absolute roll radius factor for all tires (11, 12, 13, 14) of the motor vehicle (10) on basis of an absolute roll radius analysis, wherein the processing unit (23) determining an absolute tire wear for all tires of the motor vehicle.

9. System according to claim 8, wherein the processing unit (23) determines during a regular driving mode of the motor vehicle (10) the reference roll radius factor on basis of data measured and/or calculated during the regular driving mode.

10. System according to one of claims 1 to 9, wherein the processing unit (23) determines the tire wear of tires only at a predefined driving state of the motor vehicle 10, preferably if the lateral acceleration of the motor vehicle is relatively low and/or if brakes of the vehicle are inactive and/or if a transmission system of the motor vehicle is inactive and/or if an ESP-unit of the motor vehicle is inactive.

11. Method for determining tire wear for tires (11, 12, 13, 14) of a wheeled motor vehicle (10), comprising:

a step of measuring at least the tire pressure of the tires (11, 12, 13, 14) using a direct tire pressure determination unit (17);
a step of determining for at least some of the tires (11, 12, 13, 14) a roll radius factor corresponding to or depending from the roll radius of the respective tire using an indirect tire pressure determination unit (19);
a step of determining a vertical force factor corresponding to or depending from a vertical force applied to the tires (11, 12, 13, 14) using a tire force determination unit (21);
a step of determining the tire wear for such tires (11, 12, 13, 14) of the motor vehicle for which the indirect tire pressure determination unit (19) provides the respective roll radius factor, namely

by compensating the roll radius factor of the tires (11, 12, 13, 14) provided by the indirect tire pressure determination unit (19) on basis of the tire pressures of the respective tires provided by direct tire pressure determination unit (17) and of basis of the vertical force factor of the respective tires provided by the tire force determination unit (21) thereby providing a compensated roll radius factor for the respective tire (11, 12, 13, 14), and
by comparing the compensated roll radius factor for the respective tire with a reference roll radius factor in such a way that the difference between the compensated roll radius factor and the reference roll radius factor of the respective tire provides the tire wear of the respective tire (11, 12, 13, 14).

12. Method according to claim 11, further comprising the step of measuring the tire temperatures of the tires of the motor vehicle using the direct tire pressure determination unit (17), wherein within the step of determining the tire wear the roll radius factor of the tires provided by the indirect tire pressure determination unit (19) are also compensated on basis of the tire temperatures of the respective tires provided by the direct tire pressure determination unit (17).

13. Method according to claim 11 or 12, wherein a relative roll radius factor for a subset of tires (11, 12, 13, 14) of the motor vehicle (10) on basis of a relative roll radius analysis is performed, and wherein the processing unit (23) determines a relative tire wear only for said subset of tires (11, 12, 13, 14).

14. Method according to claim 11 or 12, wherein an absolute roll radius factor for all tires (11, 12, 13, 14) of the motor vehicle (10) on basis of an absolute roll radius analysis is performed, and wherein the processing unit (23) determines an absolute tire wear for all tires (11, 12, 13, 14) of the motor vehicle.

15. A computer program product for determining tire wear for tires (11, 12, 13, 14) of a wheeled motor vehicle (10), the computer program product comprising program code for carrying out, when executed on a processing system, the steps of method according to one of claims 11 to 14.

**Patentansprüche**

1. System zur Bestimmung von Reifenabrieb bei Reifen (11, 12, 13, 14) eines mit Reifen bestückten Kraftfahrzeugs (10), umfassend:

    eine Einheit (17) zur direkten Bestimmung des Reifendrucks, die so ausgelegt ist, dass sie wenigstens den Reifendruck der Reifen (11, 12, 13, 14) misst,
    **dadurch gekennzeichnet, dass** das System zur Bestimmung des Reifenabriebs der Reifen (11, 12, 13, 14) ferner Folgendes umfasst:

       eine Einheit (19) zur indirekten Bestimmung des Reifendrucks, die so ausgelegt ist, dass sie wenigstens für einige der Reifen (11, 12, 13, 14) einen Rollradiusfaktor bestimmt, der dem Rollradius des jeweiligen Reifens entspricht beziehungsweise von diesem abhängt,
       eine Reifenkraftbestimmungseinheit (21), die so ausgelegt ist, dass sie einen vertikalen Kraftfaktor bestimmt, der der vertikalen auf die Reifen (11, 12, 13, 14) einwirkenden Kraft entspricht beziehungsweise von dieser abhängt,
       eine Verarbeitungseinheit (23), die den Reifenabrieb für solche Reifen (11, 12, 13, 14) des Kraftfahrzeugs bestimmt, für die die Einheit (19) zur indirekten Bestimmung des Reifendrucks den entsprechenden Rollradiusfaktor liefert, nämlich

          durch Kompensieren des Rollradiusfaktors der Reifen (11, 12, 13, 14), der von der Einheit (19) zur indirekten Bestimmung des Reifendrucks geliefert wird, auf Basis der Reifendrücke der jeweiligen Reifen, die von der Einheit (17) zur direkten Bestimmung des Reifendrucks geliefert werden, und auf Basis des vertikalen Kraftfaktors der jeweiligen Reifen, der von der Reifenkraftbestimmungseinheit (21) geliefert wird, wodurch ein kompensierter Rollradiusfaktor für den jeweiligen Reifen (11, 12, 13, 14) geliefert wird, und
          durch Vergleichen des kompensierten Rollradiusfaktors für den jeweiligen Reifen mit einem Bezugsrollradiusfaktor auf eine solche Weise, dass der Unterschied zwischen dem kompensierten Rollradiusfaktor und dem Bezugsrollradiusfaktor des jeweiligen Reifens den Reifenabrieb des jeweiligen Reifens (11, 12, 13, 14) liefert.

2. System nach Anspruch 1, wobei die Einheit (17) zur direkten Bestimmung des Reifendrucks ferner so ausgelegt ist, dass sie die Reifentemperaturen der Reifen des Kraftfahrzeugs misst, und wobei die Verarbeitungseinheit (23) den Rollradiusfaktor der Reifen, der durch die Einheit (19) zur indirekten Bestimmung des Reifendrucks geliefert wird, ebenfalls auf Basis der Reifentemperaturen der jeweiligen Reifen, die von der Einheit (17) zur direkten Bestimmung des Reifendrucks geliefert werden, kompensiert.

3. System nach Anspruch 1 oder 2, wobei die Einheit (17) zur direkten Bestimmung des Reifendrucks Sensoren (18) umfasst, die den Reifen (11, 12, 13, 14) des Kraftfahrzeugs zugeordnet sind, wobei die Sensoren der Einheit (17) zur direkten Bestimmung des Reifendrucks so ausgelegt sind, dass sie wenigstens den Reifendruck der Reifen des Kraftfahrzeugs und vorzugsweise die Reifentemperatur der Reifen des Kraftfahrzeugs messen.

4. System nach einem der Ansprüche 1 bis 3, wobei die Reifenkraftbestimmungseinheit (21) Sensoren (22) umfasst, die so ausgelegt sind, dass sie die Höhe der Reifen (11, 12, 13, 14) oder die Höhe der Achsen (15, 16), denen die Reifen zugeordnet sind, messen, wodurch sie den vertikalen Kraftfaktor liefern, der einer vertikalen auf die Reifen des Kraftfahrzeugs einwirkenden Kraft entspricht beziehungsweise von dieser abhängt.

5. System nach einem der Ansprüche 1 bis 4, wobei die Einheit (19) zur indirekten Bestimmung des Reifendrucks so ausgelegt ist, dass sie einen relativen Rollradiusfaktor für eine Teilmenge von Reifen (11, 12, 13, 14) des Kraftfahrzeugs (10) auf Basis einer Analyse des relativen Rollradius bestimmt, wobei die Verarbeitungseinheit (23) einen relativen Reifenabrieb nur für die Teilmenge von Reifen (11, 12, 13, 14) des Kraftfahrzeugs bestimmt.

6. System nach Anspruch 5, ferner eine Eingabevorrichtung (31) umfassend, die so ausgelegt ist, dass sie Eingabedaten empfängt, die von einem Benutzer, der über eine Benutzeroberfläche mit der Eingabevorrichtung (31) interagiert, bereitgestellt werden, wobei die Verarbeitungseinheit (23) den relativen Reifenabrieb auf Basis der von der Eingabevorrichtung (31) empfangenen Eingabedaten bestimmt.

7. System nach Anspruch 5 oder 6, wobei die Verarbeitungseinheit (23) auf Basis der von der Eingabevorrichtung (31) empfangenen Eingabedaten den Bezugsrollradiusfaktor bestimmt.

8. System nach einem der Ansprüche 1 bis 4, wobei die Einheit (19) zur indirekten Bestimmung des Reifendrucks so ausgelegt ist, dass sie einen absoluten Rollradiusfaktor für alle Reifen (11, 12, 13, 14) des Kraftfahrzeugs (10) auf Basis einer Analyse des absoluten Rollradius bestimmt, wobei die Verarbeitungseinheit (23) einen absoluten Reifenabrieb für alle Reifen des Kraftfahrzeugs bestimmt.

9. System nach Anspruch 8, wobei die Verarbeitungseinheit (23) in einem regulären Fahrmodus des Kraftfahrzeugs (10) den Bezugsrollradiusfaktor auf Basis der in dem regulären Fahrmodus gemessenen und/oder berechneten Daten bestimmt.

10. System nach einem der Ansprüche 1 bis 9, wobei die Verarbeitungseinheit (23) den Reifenabrieb der Reifen nur in einem vordefinierten Fahrzustand des Kraftfahrzeugs (10) bestimmt, vorzugsweise wenn die Querbeschleunigung des Kraftfahrzeugs relativ niedrig ist und/oder wenn die Bremsen des Fahrzeugs inaktiv sind und/oder wenn ein Getriebe des Kraftfahrzeugs inaktiv ist und/oder wenn eine ESP-Einheit des Kraftfahrzeugs inaktiv ist.

11. Verfahren zur Bestimmung von Reifenabrieb bei Reifen (11, 12, 13, 14) eines mit Reifen bestückten Kraftfahrzeugs (10), umfassend:

einen Schritt zur Messung wenigstens des Reifendrucks der Reifen (11, 12, 13, 14) unter Verwendung einer Einheit (17) zur direkten Bestimmung des Reifendrucks,
einen Schritt zur Bestimmung eines Rollradiusfaktors für wenigstens einige der Reifen (11, 12, 13, 14), der dem Rollradius des jeweiligen Reifens entspricht oder von diesem abhängt, unter Verwendung einer Einheit (19) zur indirekten Bestimmung des Reifendrucks,
einen Schritt zur Bestimmung eines vertikalen Kraftfaktors, der einer vertikalen auf die Reifen (11, 12, 13, 14) einwirkenden Kraft entspricht oder von dieser abhängt, unter Verwendung einer Reifenkraftbestimmungseinheit (21),
einen Schritt zur Bestimmung des Reifenabriebs für solche Reifen (11, 12, 13, 14) des Kraftfahrzeugs, für die die Einheit (19) zur indirekten Bestimmung des Reifendrucks den jeweiligen Rollradiusfaktor liefert, nämlich

durch Kompensieren des Rollradiusfaktors der Reifen (11, 12, 13, 14), der von der Einheit (19) zur indirekten Bestimmung des Reifendrucks geliefert wird, auf Basis der Reifendrücke der jeweiligen Reifen, die von der Einheit (17) zur direkten Bestimmung des Reifendrucks geliefert werden, und auf Basis des vertikalen Kraftfaktors der jeweiligen Reifen, der von der Reifenkraftbestimmungseinheit (21) geliefert wird, wodurch ein kompensierter Rollradiusfaktor für den jeweiligen Reifen (11, 12, 13, 14) geliefert wird, und
durch Vergleichen des kompensierten Rollradiusfaktors für den jeweiligen Reifen mit einem Bezugsrollradiusfaktor auf eine solche Weise, dass der Unterschied zwischen dem kompensierten Rollradiusfaktor und dem Bezugsrollradiusfaktor des jeweiligen Reifens den Reifenabrieb des jeweiligen Reifens (11, 12, 13, 14) liefert.

12. Verfahren nach Anspruch 11, ferner den Schritt zur Messung der Reifentemperaturen der Reifen des Kraftfahrzeugs unter Verwendung der Einheit (17) zur direkten Bestimmung des Reifendrucks umfassend, wobei innerhalb des Schritts zur Bestimmung des Reifenabriebs die Rollradiusfaktoren der Reifen, die von der Einheit (19) zur indirekten Bestimmung des Reifendrucks geliefert werden, ebenfalls auf Basis der Reifentemperaturen der jeweiligen Reifen, die von der Einheit (17) zur direkten Bestimmung des Reifendrucks geliefert werden, kompensiert werden.

13. Verfahren nach Anspruch 11 oder 12, wobei ein relativer Rollradiusfaktor für eine Teilmenge von Reifen (11, 12, 13, 14) des Kraftfahrzeugs (10) auf Basis einer Analyse des relativen Rollradius durchgeführt wird und wobei die Verarbeitungseinheit (23) einen relativen Reifenabrieb nur für die Teilmenge von Reifen (11, 12, 13, 14) bestimmt.

14. Verfahren nach Anspruch 11 oder 12, wobei ein absoluter Rollradiusfaktor für alle Reifen (11, 12, 13, 14) des Kraftfahrzeugs (10) auf Basis einer Analyse des absoluten Rollradius durchgeführt wird und wobei die Verarbeitungseinheit (23) einen absoluten Reifenabrieb für alle Reifen (11, 12, 13, 14) des Kraftfahrzeugs bestimmt.

15. Computerprogrammprodukt zur Bestimmung von Reifenabrieb bei Reifen (11, 12, 13, 14) eines mit Reifen bestückten Kraftfahrzeugs (10), wobei das Computerprogrammprodukt bei Ausführung auf einem Verarbeitungssystem einen Programmcode zur Durchführung der Schritte des Verfahrens nach einem der Ansprüche 11 bis 14 umfasst.

## Revendications

1. Système pour déterminer l'usure de bandages de roue (11, 12, 13, 14) d'un véhicule à moteur (10) sur roues, le système comprenant :

    une unité (17) de détermination directe de la pression des bandages de roue, configurée pour mesurer au moins la pression des bandages de roue (11, 12, 13, 14),
    **caractérisé en ce que** ledit système pour déterminer l'usure des bandages de roue (11, 12, 13, 14) comprend en outre :

        une unité (19) de détermination indirecte de la pression des bandages de roue, configurée pour déterminer sur au moins l'un des bandages de roue (11, 12, 13, 14) un facteur de rayon de roulement qui correspond au rayon de roulement du bandage de roue concerné ou qui en dépend,
        une unité (21) de détermination de la force appliquée sur le bandage de roue, configurée pour déterminer un facteur de force verticale qui correspond à une force verticale appliquée sur les bandages de roue (11, 12, 13, 14) ou qui en dépend,
        une unité de traitement (23) qui détermine l'usure des bandages de roue (11, 12, 13, 14) du véhicule à moteur pour lesquels l'unité (19) de détermination indirecte de la pression des bandages de roue a fourni le facteur de rayon de roulement, à savoir

            en compensant le facteur de rayon de roulement des bandages de roue (11, 12, 13, 14) délivré par l'unité (19) de détermination indirecte de la pression des bandages de roue sur la base des pressions des bandages de roue concernés délivrées par l'unité (17) de détermination directe de la pression des bandages de roue et sur la base du facteur de force verticale des bandages de roue concernés délivré par l'unité (21) de détermination de la force appliquée sur les bandages de roue, pour ainsi fournir un facteur compensé de rayon de roulement du bandage de roue (11, 12, 13, 14) concerné et
            en comparant le facteur de rayon de roulement compensé du bandage de roue concerné à un facteur de rayon de roulement de référence de telle sorte que la différence entre le facteur de rayon de roulement compensé et le facteur de rayon de roulement de référence du bandage de roue concerné fournisse l'usure du bandage de roue (11, 12, 13, 14) concerné.

2. Système selon la revendication 1, dans lequel l'unité (17) de détermination directe de la pression des bandages de roue est en outre configurée pour mesurer la température des bandages de roue du véhicule à moteur, l'unité de traitement (23) compensant également le facteur de rayon de roulement des bandages de roue délivré par l'unité (19) de détermination indirecte de la pression des bandages de roue sur la base de la température des bandages de roue concernés délivrée par l'unité (17) de détermination directe de la pression des bandages de roue.

3. Système selon les revendications 1 ou 2, dans lequel l'unité (17) de détermination directe de la pression des bandages de roue comprend des capteurs (18) attribués aux bandages de roue (11, 12, 13, 14) du véhicule automobile, les capteurs de l'unité (17) de détermination directe de la pression des bandages de roue étant configurés pour mesurer au moins la pression des bandages de roue du véhicule automobile et de préférence la température des bandages de roue du véhicule automobile.

4. Système selon l'une des revendications 1 à 3, dans lequel l'unité (21) de détermination de la force appliquée sur les bandages de roue comprend des capteurs (22) configurés pour mesurer la hauteur des bandages de roue (11, 12, 13, 14) ou la hauteur des essieux (15, 16) auxquels les bandages de roue sont attribués, pour ainsi fournir le facteur de force verticale qui correspond à la force verticale appliquée sur les bandages de roue du véhicule automobile ou qui en dépend.

5. Système selon l'une des revendications 1 à 4, dans lequel l'unité (19) de détermination indirecte de la pression des bandages de roue est configurée pour déterminer un facteur de rayon de roulement relatif pour un sous-ensemble de bandages de roue (11, 12, 13, 14) du véhicule automobile (10) sur la base d'une analyse du rayon de roulement relatif, l'unité de traitement (23) déterminant l'usure relative uniquement pour ledit sous-ensemble de bandages de roue (11, 12, 13, 14) du véhicule automobile.

6. Système selon la revendication 5, comprenant en outre un dispositif d'introduction (31) configuré pour recevoir des données d'introduction délivrées par un utilisateur qui interagit avec le dispositif d'introduction (31) par l'intermédiaire d'une interface d'utilisateur, l'unité de traitement (23) déterminant l'usure relative du bandage de roue sur la base des données d'introduction reçues par le dispositif d'introduction (31).

7. Système selon les revendications 5 ou 6, dans lequel le traitement (23) détermine le facteur de rayon de roulement de référence sur la base des données d'introduction reçues par le dispositif d'introduction (31).

8. Système selon l'une des revendications 1 à 4, dans lequel l'unité (19) de détermination indirecte de la pression des bandages de roue est configurée pour déterminer un facteur de rayon de roulement absolu pour un sous-ensemble de bandages de roue (11, 12, 13, 14) du véhicule automobile (10) sur la base d'une analyse du rayon de roulement absolu, l'unité de traitement (23) déterminant l'usure absolue uniquement pour ledit sous-ensemble de bandages de roue du véhicule automobile.

9. Système selon la revendication 8, dans lequel l'unité de traitement (23) détermine pendant un mode de roulage normal du véhicule automobile (10) le facteur de rayon de roulement de référence sur la base de données mesurées et/ou calculées pendant le mode de roulage normal.

10. Système selon l'une des revendications 1 à 9, dans lequel l'unité de traitement (23) détermine l'usure des bandages de roue uniquement dans un état prédéfini de roulage du véhicule automobile (10), de préférence lorsque l'accélération latérale du véhicule automobile est relativement basse, les freins du véhicule sont inactifs, le système de transmission du véhicule automobile est inactif et/ou une unité ESP du véhicule automobile est inactive.

11. Procédé de détermination de l'usure de bandages de roue (11, 12, 13, 14) d'un véhicule automobile (10) à roues, le procédé comportant :

> une étape de mesure d'au moins la pression des bandages de roue (11, 12, 13, 14) en utilisant une unité (17) de détermination directe de la pression des bandages de roue,
> une étape de détermination pour au moins certains des bandages de roue (11, 12, 13, 14) d'un facteur de rayon de roulement qui correspond au rayon de roulement du bandage de roue concerné ou qui en dépend, en utilisant une unité (19) de détermination indirecte de la pression des bandages de roue,
> une étape de détermination d'un facteur de force verticale qui correspond à une force verticale appliquée sur les bandages de roue (11, 12, 13, 14) ou qui en dépend, en utilisant une unité (21) de détermination de la force appliquée sur les bandages de roue,
> une étape de détermination de l'usure de ces bandages de roue (11, 12, 13, 14) du véhicule automobile pour lesquels l'unité (19) de détermination indirecte de la pression des bandages de roue fournit le facteur respectif de rayon de roulement, à savoir

>> en compensant le facteur de rayon de roulement des bandages de roue (11, 12, 13, 14) délivré par l'unité (19) de détermination indirecte de la pression des bandages de roue sur la base des pressions des bandages de roue concernés délivrées par l'unité (17) de détermination directe de la pression des bandages de roue et sur la base du facteur de force verticale des bandages de roue concernés délivré par l'unité (21) de détermination de la force appliquée sur les bandages de roue, pour ainsi fournir un facteur compensé de rayon de roulement du bandage de roue (11, 12, 13, 14) concerné et

en comparant le facteur de rayon de roulement compensé du bandage de roue concerné à un facteur de rayon de roulement de référence de telle sorte que la différence entre le facteur de rayon de roulement compensé et le facteur de rayon de roulement de référence du bandage de roue concerné fournisse l'usure du bandage de roue (11, 12, 13, 14) concerné.

12. Procédé selon la revendication 11, comprenant en outre l'étape qui consiste à mesurer la température des bandages de roue du véhicule automobile en utilisant l'unité (17) de détermination directe de la pression des bandages de roue, dans lequel au cours de l'étape de détermination de l'usure du bandage de roue les facteurs de rayon de roulement des bandages de roue délivrés par l'unité (19) de détermination indirecte de la pression des bandages de roue sont également compensée sur la base de la température des bandages de roue concernés délivrée par l'unité (17) de détermination directe de la pression des bandages de roue.

13. Procédé selon les revendications 11 ou 12, dans lequel une analyse du rayon de roulement relatif est réalisée pour un sous-ensemble de bandages de roue (11, 12, 13, 14) du véhicule automobile (10) l'unité de traitement (23) déterminant l'usure relative uniquement pour ledit sous-ensemble de bandages de roue (11, 12, 13, 14) du véhicule automobile.

14. Procédé selon les revendications 11 ou 12, dans lequel un facteur de rayon de roulement absolu est déterminé pour tous les bandages de roue (11, 12, 13, 14) du véhicule automobile (10) sur la base d'une analyse du rayon de roulement absolu, l'unité de traitement (23) déterminant l'usure absolue pour tous les bandages de roue (11, 12, 13, 14) du véhicule automobile.

15. Produit de programme informatique servant à déterminer l'usure de bandages de roue (11, 12, 13, 14) d'un véhicule automobile (10) sur roues, le produit de programme informatique comprenant un code de programme qui, lorsqu'il est exécuté sur un système de traitement, met en oeuvre les étapes du procédé selon l'une des revendications 11 à 14.

Fig. 1

Fig. 2

**Fig. 3**

**Fig. 4**

**Fig. 5**

$TW_{11}, TW_{12}$

$TW_{13}$

$TW_{14}$

t0    t1    t

**Fig. 6**

$TW_{11}, TW_{12}, TW_{13}, TW_{14}$

$TW_{11}$    $TW_{12}$

$TW_{13}$

t0    t1    t

$TW_{14}$

**Fig. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100060443 A1
- US 20100186492 A1
- EP 1403100 A1
- DE 10360723 A1